# EUROPÄISCHE PATENTANMELDUNG

(11) **EP 4 446 204 A1**
(43) Veröffentlichungstag der Anmeldung: **16.10.2024**
(21) Anmeldenummer: 24000027.3
(22) Anmeldetag: 05.03.2024
(51) Int. Cl.: B62D 35/00, B62D 37/02

(54) **SEITLICHER HECKBEREICH EINES KRAFTFAHRZEUGS MIT EINER LUFTLEITVORRICHTUNG UND KRAFTFAHRZEUG**

(30) Priorität: 12.04.2023 DE 102023109208; 12.04.2023 DE 102023109191; 07.07.2023 DE 102023117958
(71) Anmelder: Dr. Ing. h.c. F. Porsche Aktiengesellschaft, 70435 Stuttgart (DE)
(72) Erfinder: Beierl, Dominik, 70825 Korntal-Münchingen (DE); Zeh, Moritz, 70327 Stuttgart (DE)

(57) **Zusammenfassung**

Seitlicher Heckbereich (10) eines Kraftfahrzeugs, mit einem hinteren Karosserieteil (11), welches sich zumindest hinter einem hinteren Radhaus (12) des Kraftfahrzeugs erstreckt, mit einer Luftleitvorrichtung (13), wobei ein Luftführungselement (14) der Luftleitvorrichtung (13) relativ zu dem hinteren Karosserieteil (11) zwischen einer in den seitlichen Heckbereich (10) eingefahrenen Ruhestellung und einer aus dem seitlichen Heckbereich (10) ausgefahrenen Betriebsstellung derart verlagerbar ist, dass in der eingefahrenen Ruhestellung des Luftführungselements (14) eine Strömungsführungsfläche (16) des Luftführungselements (14) von dem hinteren Karosserieteil (11) verdeckt ist, und dass in der ausgefahrenen Betriebsstellung des Luftführungselements (14) die Strömungsführungsfläche (16) des Luftführungselements (14) gegenüber der eingefahrenen Ruhestellung einerseits in Längsrichtung des Kraftfahrzeugs gesehen nach hinten und andererseits in Querrichtung des Kraftfahrzeugs gesehen nach außen verlagert ist. Fig. 3a

## Beschreibung

Die Erfindung betrifft einen seitlichen Heckbereich eines Kraftfahrzeugs mit einer Luftleitvorrichtung. Ferner betrifft die Erfindung ein Kraftfahrzeug.

Aus der Praxis sind unterschiedlichste Luftleitvorrichtungen von Kraftfahrzeugen bekannt. Luftleitvorrichtungen, die einem seitlichen Bereich eines Kraftfahrzeugs zugeordnet sind und dort der Strömungsführung dienen, werden auch als Sideblades bezeichnet.

DE 10 2019 207 906 A1 offenbart ein Kraftfahrzeug mit einem Sideblade, welches oberhalb eines Hinterrads hinter einem Fenster einer hinteren Fahrzeugtür angeordnet ist.

DE 20 2011 005 504 U1 offenbart ein Kraftfahrzeug mit einem Luftleitelement, welches zwischen einem Vorderrad und einem Hinterrad verläuft und dort der Strömungsführung dient.

DE 10 2018 123 487 A1 offenbart ein Kraftfahrzeug mit einer als Radspoiler ausgebildeten Luftleitvorrichtung.

DE 10 2019 114 113 A1, DE 10 2007 003 601 A1 und FR 3 001 192 A1 offenbaren weiteren Stand der Technik.

Die Erfindung betrifft einen seitlichen Heckbereich eines Kraftfahrzeugs mit einer Luftleitvorrichtung, die der Strömungsführung im seitlichen Heckbereich hinter einem hinteren Radhaus des Kraftfahrzeugs dient. Der Erfindung liegt die Aufgabe zu Grunde, einen seitlichen Heckbereich mit einer Luftleitvorrichtung zu schaffen, die eine besonders vorteilhafte Strömungsführung hinter dem hinteren Radhaus des Kraftfahrzeugs ermöglicht.

Diese Aufgabe wird durch einen seitlichen Heckbereich eines Kraftfahrzeugs gemäß Anspruch 1 und durch ein Kraftfahrzeug gemäß Anspruch 11 gelöst.

Der erfindungsgemäße seitliche Heckbereich des Kraftfahrzeugs weist ein hinteres Karosserieteil aus, welches sich zumindest hinter einem hinteren Radhaus des Kraftfahrzeugs erstreckt. Der erfindungsgemäße seitliche Heckbereich des Kraftfahrzeugs weist ferner eine Luftleitvorrichtung auf, wobei ein Luftführungselement der Luftleitvorrichtung relativ zu dem hinteren Karosserieteil zwischen einer in den seitlichen Heckbereich eingefahrenen Ruhestellung und einer aus dem seitlichen Heckbereich ausgefahrenen Betriebsstellung derart verlagerbar ist, dass in der eingefahrenen Ruhestellung des Luftführungselements eine Strömungsführungsfläche des Luftführungselements.von dem hinteren Karosserieteil verdeckt ist, und dass in der ausgefahrenen Betriebsstellung des Luftführungselements die Strömungsführungsfläche des Luftführungselements gegenüber der eingefahrenen Ruhestellung einerseits in Längsrichtung des Kraftfahrzeugs gesehen nach hinten und andererseits in Querrichtung des Kraftfahrzeugs gesehen nach außen verlagert ist. Dann, wenn das Luftführungselement der Luftleitvorrichtung in die eingefahrene Ruhestellung verlagert ist, ist eine Strömungsführungsfläche des Luftführungselements der Luftleitvorrichtung in den seitlichen Heckbereich eingefahren und von dem hinteren Karosserieteils verdeckt. In der Ruhestellung erfolgt dann keine Strömungsführung über die Luftleitvorrichtung. In der ausgefahrenen Betriebsstellung hingegen erfolgt eine Strömungsführung mithilfe der Luftleitvorrichtung hinter dem jeweiligen hinteren Radhaus des seitlichen Heckbereichs, wobei die Strömungsführungsfläche in der ausgefahrenen Betriebsstellung gegenüber der eingefahrenen Ruhestellung einerseits in Längsrichtung des Kraftfahrzeugs nach hinten und andererseits in Querrichtung des Kraftfahrzeugs nach außen verlagert ist. Dies erlaubt in der Betriebsstellung der Luftleitvorrichtung eine besonders vorteilhafte Strömungsführung im seitlichen Heckbereich hinter einem jeweiligen hinteren Radhaus des Kraftfahrzeugs.

Vorzugsweise verläuft in der ausgefahrenen Betriebsstellung die Strömungsführungsfläche des Luftführungselements bündig zur einer sich vorne unmittelbar an die Strömungsführungsfläche anschließenden Außenfläche des hinteren Karosserieteils. Dies ist für eine vorteilhafte Strömungsführung in der ausgefahrenen Betriebsstellung besonders bevorzugt. Der bündige Übergang zwischen der Strömungsführungsfläche des Luftführungselements und der sich vorne unmittelbar an die Strömungsführungsfläche des ausgefahrenen Luftführungselements anschließenden Außenfläche des hinteren Karosserieteils erlaubt in der ausgefahrenen Betriebsstellung der Luftleitvorrichtung eine besonders vorteilhafte Umströmung der Strömungsführungsfläche.

Vorzugsweise weist die Luftleitvorrichtung zusätzlich zu dem die Strömungsführungsfläche aufweisenden, verlagerbaren Luftführungselement eine Führungs- und Antriebseinheit aufweist, welche das Luftführungselement bei der Verlagerung relativ zum hinteren Karosserieteil führt und antreibt. Die Führungs- und Antriebseinheit weist mindestens eine feststehende Führungsschiene und mindestens einen relativ zur feststehenden Führungsschiene verlagerbaren Gleitstein auf, wobei das Luftführungselement mit mindestens einem Führungsbolzen in eine Führungsnut der jeweiligen Führungsschiene und in mindestens eine Führungsnut des jeweiligen Gleitsteins eingreift. Die Führungs- und Antriebseinheit weist ferner einen Antrieb auf, welcher den jeweiligen Gleitstein relativ zur jeweiligen Führungsschiene und über den jeweiligen Gleitstein das Luftführungselement relativ zum hinteren Karosserieteil verlagert. Über die Führungs- und Antriebseinheit kann das Luftführungselement besonders vorteilhaft zwischen der eingefahrenen Ruhestellung und der ausgefahrenen Betriebsstellung verlagert werden. Das Zusammenspiel der mindestens einen feststehenden Führungsschiene, des mindestens einen Gleitsteins sowie des mindestens einen Führungsbolzens erlaubt eine einfache Verlagerung des Luftführungselements und damit der Strömungsführungsfläche sowohl in Längsrichtung als auch in Querrichtung des Kraftfahrzeugs bei der Verlagerung desselben zwischen der eingefahrenen Ruhestellung und der ausgefahrenen Betriebsstellung. Es besteht keine Gefahr eines Verklemmens des Luftführungselements bei der Verlagerung.

Vorzugsweise weist die Führungsnut der jeweiligen Führungsschiene einen ersten Führungsabschnitt für die Verlagerung des mindestens einen Führungsbolzens und damit des Luftführungselements in Längsrichtung oder hauptsächlich in Längsrichtung und mindestens einen zweiten Führungsabschnitt für die Verlagerung des mindestens einen Führungsbolzens und damit des Luftführungselements in Querrichtung oder hauptsächlich in Querrichtung auf, wobei die mindestens einen Führungsnut des mindestens einen Gleitsteins gekrümmt kontriert ist und schräg zu den Führungsabschnitten der jeweiligen Führungsschiene verläuft. Die Führungsabschnitte der Führungsnut der jeweiligen Führungsschiene sowie die jeweilige Führungsnut des jeweiligen Gleitsteis erlauben die Verlagerung des Luftführungselements in Längsrichtung und Querrichtung des Kraftfahrzeugs auf besonders vorteilhafte Art und Weise.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1a, 1b: zwei Ansichten eines erfindungsgemäßen seitlichen Heckbereichs eines Kraftfahrzeugs in einem ersten Zustand mit einer Luftleitvorrichtung in einer eingefahrenen Ruhestellung,
- Fig. 2a, 2b: zwei Ansichten des erfindungsgemäßen seitlichen Heckbereichs des Kraftfahrzeugs in einem zweiten Zustand mit einer Luftleitvorrichtung in einer Zwischenstellung zwischen der eingefahrenen Ruhestellung und einer ausgefahrenen Betriebsstellung,
- Fig. 3a, 3b: zwei Ansichten des erfindungsgemäßen seitlichen Heckbereichs des Kraftfahrzeugs in einem dritten Zustand mit einer Luftleitvorrichtung in der ausgefahrenen Betriebsstellung,
- Fig. 4a, 4b: zwei Ansichten der Luftleitvorrichtung in der eingefahrenen Ruhestellung,
- Fig. 5a, 5b: zwei Ansichten der Luftleitvorrichtung in der Zwischenstellung,
- Fig. 6a, 6b: zwei Ansichten der Luftleitvorrichtung in der ausgefahrenen Betriebsstellung,
- Fig. 7a, 7b: zwei weitere Ansichten des erfindungsgemäßen seitlichen Heckbereichs des Kraftfahrzeugs in der eingefahrenen Ruhestellung und in der ausgefahrenen Betriebsstellung zur Verdeutlichung der Strömungsführung.

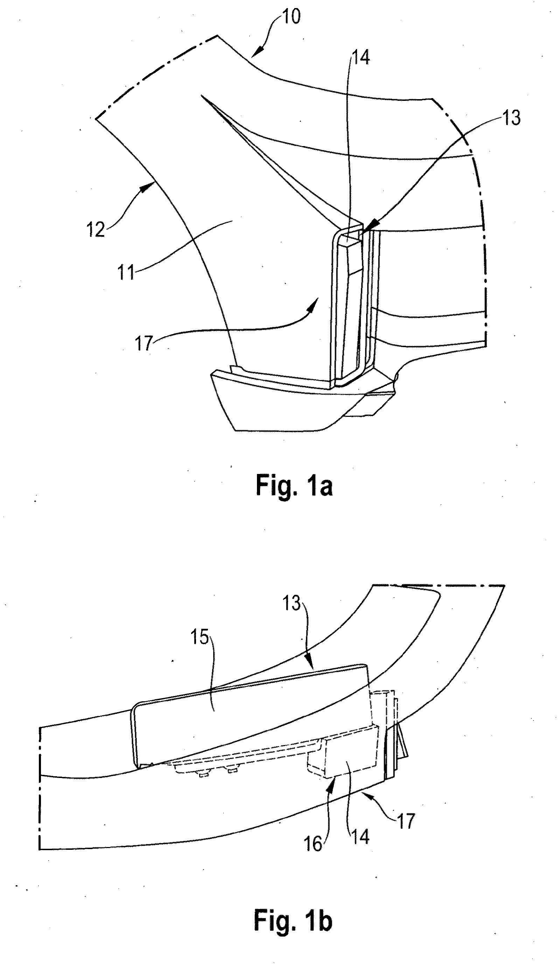

Fig. 1a bis 3b zeigen einen Ausschnitt aus einem erfindungsgemäßen seitlichen Heckbereich 10 eines Kraftfahrzeugs. Vom seitlichen Heckbereich 10 ist ein hinteres Karosserieteil 11 gezeigt, dass sich in dem seitlichen Heckbereich 10 des Kraftfahrzeugs zumindest hinter einem hinteren Radhaus 12 des Kraftfahrzeugs erstreckt.

Zu beiden Seiten des Kraftfahrzeugs ist ein solcher seitlicher Heckbereich 10 ausgebildet.

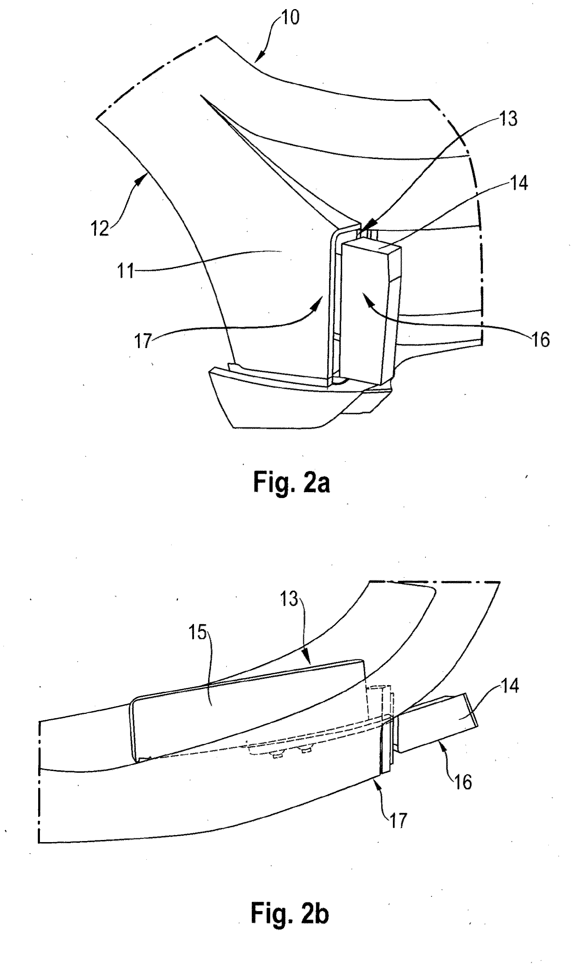

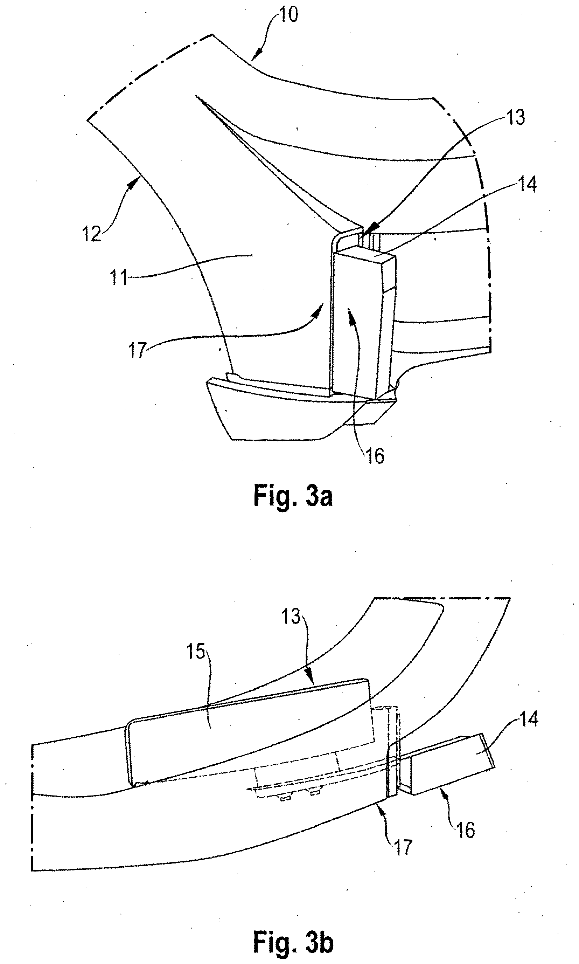

Der seitlichen Heckbereichs 10 weist eine Luftleitvorrichtung 13 auf. Die Luftleitvorrichtung 13 verfügt über ein Luftführungselement 14 sowie über eine Führungs- und Antriebseinheit 15. Das Luftführungselement 14 ist mithilfe der Führungs- und Antriebseinheit 15 relativ zum hinteren Karosserieteil 11 zwischen einer in den seitlichen Heckbereich 10 eingefahrenen Ruhestellung (siehe Fig. 1a, 1b) und einer aus demselben ausgefahrenen Betriebsstellung (siehe Fig. 3a, 3b) verlagerbar, wobei Fig. 2a, 2b eine Zwischenstellung des Luftführungselements 14 zwischen der eingefahrenen Ruhestellung der Fig. 1a, 1b und der ausgefahrenen Betriebsstellung der Fig. 3a, 3b zeigen.

Die Führungs- und Antriebseinheit 15 ist vollständig von dem hinteren Karosserieteil 11 verdeckt und so in oder an dem seitlichen Heckbereich 10 montiert, dass die Führungs- und Antriebseinheit 15 gegenüber dem hinteren Karosserieteil 11 feststeht. Das Luftführungselement 14 ist relativ zur Führungs- und Antriebseinheit 15 sowie relativ zum hinteren Karosserieteil 11 verlagerbar.

Das Luftführungselement 14 weist eine Strömungsführungsfläche 16 auf. In der eingefahrenen Ruhestellung (Fig. 1a, 1b) des Luftführungselements 14 ist die Strömungsführungsfläche 16 desselben in den seitlichen Heckbereich 10 eingefahren und von dem hinteren Karosserieteil 11 verdeckt. In der ausgefahrenen Betriebsstellung (Fig. 3a, 3b) des Luftführungselements 14 ist die Strömungsführungsfläche 16 desselben aus dem seitlichen Heckbereich 10 herausgefahren und nicht von dem hinteren Karosserieteil 11 verdeckt, wobei die Strömungsführungsfläche 16 des Luftführungselements 14 in der ausgefahrenen Betriebsstellung gegenüber der eingefahrenen Ruhestellung einerseits in Längsrichtung des Kraftfahrzeugs gesehen nach hinten und andererseits in Querrichtung des Kraftfahrzeugs gesehen nach außen verlagert ist. In der in Fig. 2a, 2b gezeigten Zwischenstellung ist die Strömungsführungsfläche 16 lediglich in Längsrichtung des Kraftfahrzeugs gesehen nach hinten verlagert. In ausgefahrenen Betriebsstellung (Fig. 3a, 3b) ist dieselbe auch in Querrichtung des Kraftfahrzeugs gesehen nach außen verlagert.

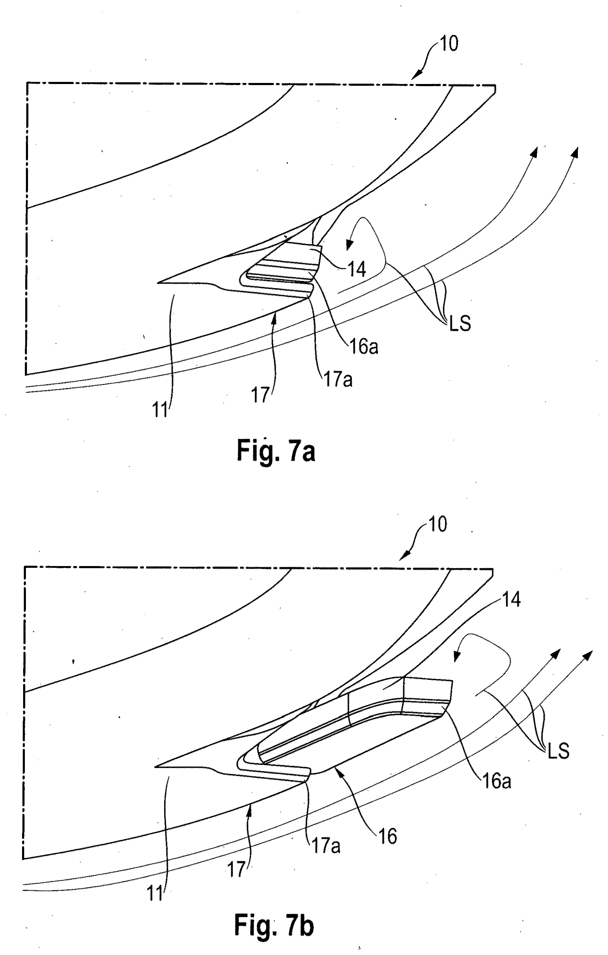

In der ausgefahrenen Betriebsstellung des Luftführungselements 14 (Fig. 3a, 3b) ist die Strömungsführungsfläche 16 des Luftführungselements 14 insbesondere derart in Querrichtung des Kraftfahrzeugs gesehen nach außen verlagert, dass dieselbe bündig zu einer sich vorne unmittelbar an die Strömungsführungsfläche 16 anschließenden Außenfläche 17 des hinteren Karosserieteils 11 verläuft. Auch Fig. 7a und 7b zeigen das Luftführungselement 14 der Luftleitvorrichtung 13 in zwei unterschiedlichen Zuständen, nämlich in Fig. 7a in der eingefahrenen Ruhestellung und in Fig. 7b in der ausgefahrenen Betriebsstellung, wobei Fig. 7b wiederum den bündigen Übergang zwischen der Strömungsführungsfläche 16 des in die Betriebsstellung ausgefahrenen Luftführungselements 14 und der sich vorne bzw. vor derselben unmittelbar anschließenden Außenfläche 17 des hinteren Karosserieteils 11 zeigt. In Fig. 7a und 7b ist auch eine Luftströmung LS im Bereich des hinteren Karosserieteils 11 gezeigt, nämlich in Fig. 7a eine Luftströmung LS bei in die eingefahrene Ruhestellung verlagertem Luftführungselement 14 und in Fig. 7b bei in die ausgefahrene Betriebsstellung verlagertem Luftführungselement 14.

Während in Fig. 7a die Luftströmung LS sich im Bereich einer Kante 17a der Außenfläche 17 des hinteren Karosserieteils 11 ablöst, erfolgt in Fig. 7b diese Ablösung der Luftströmung LS im Bereich einer Kante 16a der Strömungsführungsfläche 16 des Luftführungselements 14. In Fig. 7a ist diese Kante 16a der Strömungsführungsfläche 16 außen von der Kante 17a der Außenfläche 17 des hinteren Karosserieteils 11 verdeckt.

In der eingefahrenen Ruhestellung ist die Strömungsführungsfläche 16 des Luftführungselements 14 vollständig in den seitlichen Heckbereich 10 eingefahren und außen von der Außenfläche 17 des hinteren Karosserieteils 11 verdeckt.

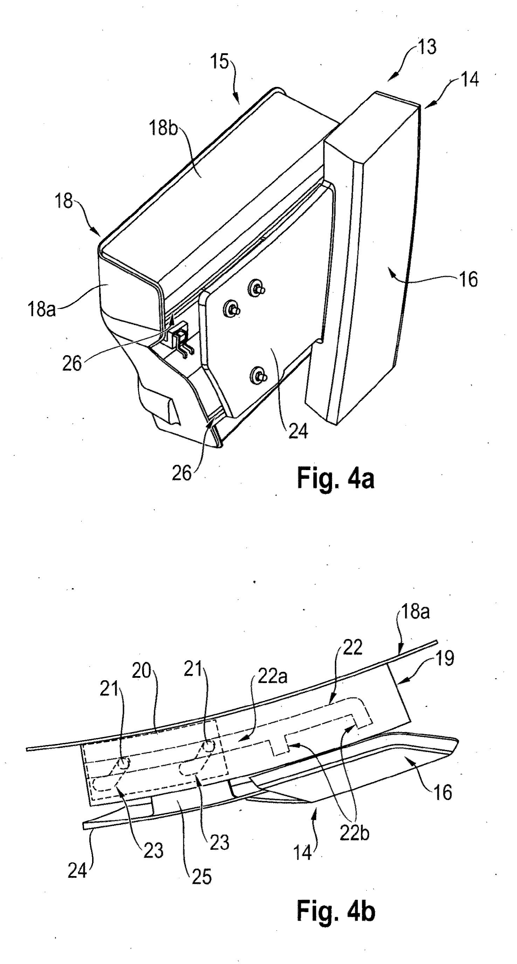

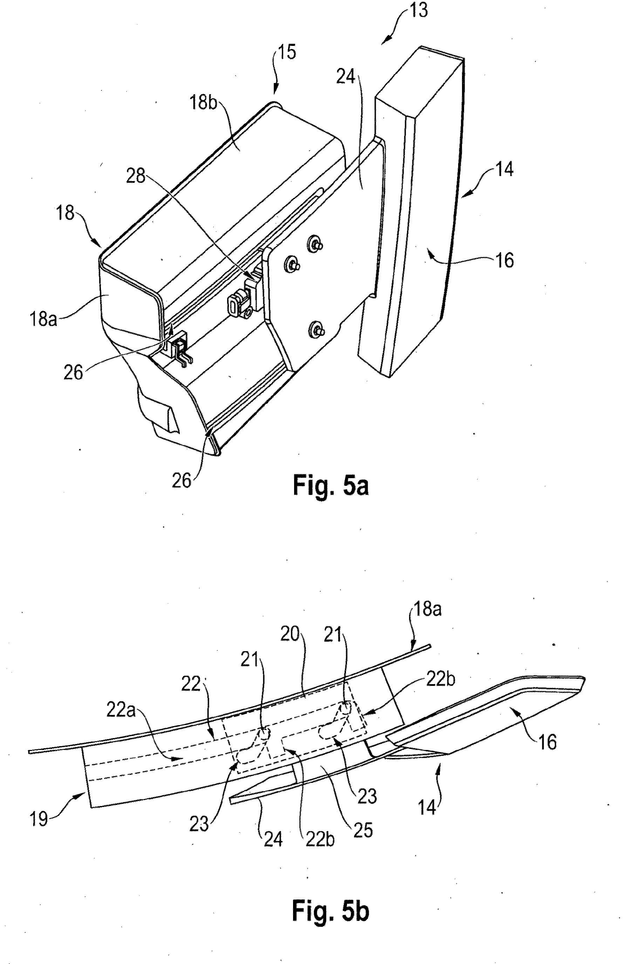

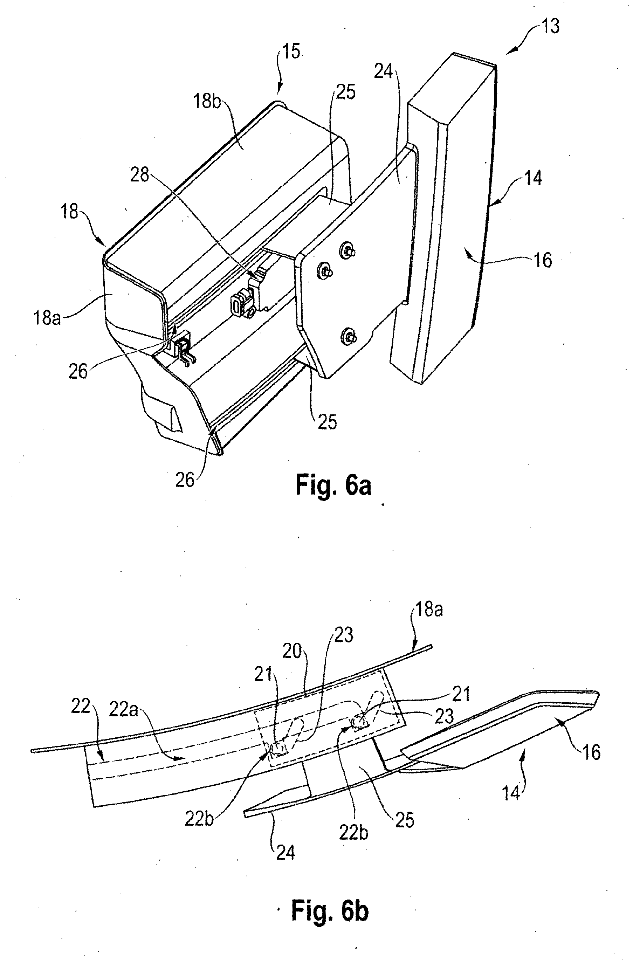

Fig. 4a bis 6b zeigen weitere Details der Luftleitvorrichtung 13 des erfindungsgemäßen seitlichen Heckbereichs 10, wobei in Fig. 4a bis 6b die Luftleitvorrichtung 13 jeweils in Alleindarstellung gezeigt ist, nämlich in Fig. 4a, 4b in der eingefahrenen Ruhestellung, in Fig. 6a, 6b in der ausgefahrenen Betriebsstellung und in Fig. 5a, 5b in einer Zwischenstellung zwischen der eingefahrenen Ruhestellung und der ausgefahrenen Betriebsstellung.

Die Führungs- und Antriebseinheit 15 der Luftleitvorrichtung 13, die der Verlagerung des Luftführungselements 14 zwischen der eingefahrenen Ruhestellung und der ausgefahrenen Betriebsstellung dient, verfügt über ein Gehäuse 18 aus einem ersten Gehäuseteil 18a und einem zweiten Gehäuseteil 18b. In Fig. 4a, 5a, 6a sind jeweils beide Gehäuseteil 18a, 18b gezeigt. In Fig. 4b, 5b, 6b ist jeweils das zweite Gehäuseteil 18b nicht gezeigt.

In dem Gehäuse 18 ist mindestens eine feststehende Führungsschiene 19 der Führungs- und Antriebseinheit 15 aufgenommen. Insbesondere sind in dem Gehäuse 18 zwei derartige Führungsschienen 19 angeordnet, nämlich eine obere feststehende Führungsschiene 19 und eine untere feststehende Führungsschiene 19. In Fig. 4b, 5b, 6b ist jeweils die obere feststehende Führungsschiene 19 sichtbar.

Mit der jeweiligen feststehenden Führungsschiene 19 wirkt ein relativ zur, jeweiligen feststehenden Führungsschiene 19 verlagerbarer Gleitstein 20 zusammen. Das Luftführungselement 14 ist mit jeweils mindestens einem Führungsbolzen 21 an einer jeweiligen Führungsschiene 19 und an einem jeweiligen Gleitstein 20 geführt.

Vorzugsweise wirken mit der oberen feststehende Führungsschiene 19 und dem oberen Gleitstein 20 zwei obere Führungsbolzen 21 des Luftführungselements 14 zusammen. Mit der unteren feststehende Führungsschiene 19 und dem unteren Gleitstein 20 (in Fig. 4b, 5b, 6b nicht sichtbar) wirkt vorzugsweise ein einziger unterer Führungsbolzen 21 des Luftführungselements 14 zusammen. Die Führungsbolzen 21 greifen in eine Führungsnut 22 der jeweiligen Führungsschiene 19 und in eine jeweilige Führungsnut 23 des jeweiligen Gleitsteins 20 ein. Über einen Antrieb 28 der Führungs- und Antriebseinheit 15 ist der jeweilige Gleitstein 20 relativ zur jeweiligen Führungsschiene 19 und über den jeweiligen Gleitstein 20 das Luftführungselement 14 relativ zum hinteren Karosserieteil 11 verlagerbar.

Soll das Luftführungselement 14 aus der eingefahrenen Ruhestellung der Fig. 4a, 4b in die die ausgefahrene Betriebsstellung der Fig. 6a, 6b verlagert werden, so wird zunächst der jeweilige Gleitstein 20 translatorisch entlang der jeweiligen Führungsschiene 19 verlagert, wobei hierbei der oder die Führungsbolzen 21 in einem ersten Führungsabschnitt 22a der jeweiligen Führungsnut 22 der jeweiligen Führungsschiene 19 verlagert wird oder werden.

Kommt der oder einer der Führungsbolzen 21 an einer Begrenzung dieses ersten Führungsabschnitts 22a der Führungsnut 22 der jeweiligen Führungsschiene 19 zur Anlage, so kann oder können der oder die Führungsbolzen 21 nicht weiter innerhalb des ersten Führungsabschnitts 22a verlagert werden. In diesem Fall nimmt dann das Luftführungselement 14 die Zwischenstellung der Fig. 5a, 5b ein.

Wird nachfolgend der jeweilige Gleitstein 20 weiter translatorisch relativ zur jeweiligen Führungsschiene 19 verlagert, so wird oder werden der oder die Führungsbolzen 21, die auch in der mindestens einen Führungsnut 23 des Gleitsteins 20 geführt sind, über den jeweiligen Gleitstein 20, nämlich die mindestens eine Führungsnut 23 desselben, in zweite Führungsabschnitte 22b der Führungsnut 22 der jeweiligen Führungsschiene 19 gedrückt, und zwar in Querrichtung des Kraftfahrzeugs nach außen. Dies wird durch die gekrümmte Kontur der mindestens einen Führungsnut 23 des jeweiligen Gleitsteins 20 bewirkt, die gekrümmt konturiert ist und schräg zu den Führungsabschnitten 22a, 22b der Führungsnut 22 der jeweiligen Führungsschiene 19 verläuft.

Bei der Verlagerung des Luftführungselements 14 von der in Fig. 4b gezeigten eingefahrenen Ruhestellung in die in Fig. 6b gezeigte ausgefahrene Betriebsstellung werden demnach zunächst die Führungsbolzen 21 des Luftführungselements 14 entlang der ersten Führungsabschnitte 22a der Führungsnuten 22 der Führungsschienen 19 in Längsrichtung oder hauptsächlich in Längsrichtung des Kraftfahrzeugs verlagert, bis dies nicht weiter möglich ist. In diesem Fall nimmt dann das Luftführungselement 14 die Zwischenstellung der Fig. 5b ein und ist in Fahrzeuglängsrichtung nach hinten verlagert. Die ersten Führungsabschnitte 22a der Führungsnuten 22 der Führungsschienen 19 erstrecken sich in Längsrichtung oder hauptsächlich in Längsrichtung des Kraftfahrzeugs. Dieselben können mit der Längsrichtung des Kraftfahrzeugs einen spitzen Winkel von bis zu 15° oder von bis zu 10° oder von bis zu 5° einschließen. Durch weitere Relativbewegung des jeweiligen Gleitsteins 20 gegenüber der jeweiligen Führungsschiene 19 nach hinten werden sodann die Führungsbolzen 21 entlang der Führungsnuten 23 der Gleitsteine 20 sowie entlang der sich in Fahrzeugquerrichtung oder hauptsächlich in Fahrzeugquerrichtung erstreckenden zweiten Führungsabschnitte 22b der Führungsnuten 22 der Führungsschienen 19 in Querrichtung des Kraftfahrzeugs nach außen bewegt. Hierbei wird dann das Luftführungselement 14 in die Betriebsstellung der Fig. 6b überführt. Die zweiten Führungsabschnitte 22b verlaufen senkrecht zu den ersten Führungsabschnitten 22a.

Die Luftleitvorrichtung 13 bzw. das Luftführungselement 14 verfügt über eine Zunge 24, an welcher Vorsprünge 25 angreifen. Die Zunge 24 erstreckt sich vom Luftführungselement 14 aus in Fahrzeuglängsrichtung nach vorne, ist zusammen mit dem Luftführungselement 14 verlagerbar und ist stets vom hinteren Karosserieteil 11 verdeckt. Die Zunge 24 ist sozusagen Bestandteil des Luftführungselements 14, stellt jedoch nicht die Strömungsführungsfläche 16 des Luftführungselements 14 bereit. Die Vorsprünge 25 erstrecken sich ausgehend von der Zunge 24 in Fahrzeugquerrichtung. An den Vorsprüngen 25 sind die Führungsbolzen 21 ausgebildet oder angeordnet. Auch die Vorsprünge 25 und Führungsbolzen 21 sind sozusagen Bestandteil des Luftführungselements 14.

Die Vorsprünge 25 erstrecken sich dabei ausgehend von einer der Strömungsführungsfläche 16 abgewandten Seite der Zunge 24 mit Abschnitten durch Schlitze 26 im Gehäuseteil 18b in das Gehäuse 18 hinein. An den im Gehäuse 18 positionierten Abschnitten dieser Vorsprünge 25 sind die Führungsbolzen 21 ausgebildet oder angeordnet.

Über das Zusammenspiel der jeweiligen Führungsschiene 19 mit dem jeweiligen Gleitstein 20 wird eine überlagerte Doppelführung bereitgestellt. Zunächst erfolgt eine Verlagerung in Längsrichtung oder hauptsächlich in Längsrichtung, anschließend eine Verlagerung in Querrichtung oder hauptsächlich in Querrichtung.

## Patentansprüche

1. Seitlicher Heckbereich (10) eines Kraftfahrzeugs, mit
einem hinteren Karosserieteil (11), welches sich zumindest hinter einem hinteren Radhaus (12) des Kraftfahrzeugs erstreckt,
einer Luftleitvorrichtung (13), wobei ein Luftführungselement (14) der Luftleitvorrichtung (13) relativ zu dem hinteren Karosserieteil (11) zwischen einer in den seitlichen Heckbereich (10) eingefahrenen Ruhestellung und einer aus dem seitlichen Heckbereich (10) ausgefahrenen Betriebsstellung derart verlagerbar ist, dass
in der eingefahrenen Ruhestellung des Luftführungselements (14) eine Strömungsführungsfläche (16) des Luftführungselements (14) von dem hinteren Karosserieteil (11) verdeckt ist,
in der ausgefahrenen Betriebsstellung des Luftführungselements (14) die Strömungsführungsfläche (16) des Luftführungselements (14) gegenüber der eingefahrenen Ruhestellung einerseits in Längsrichtung des Kraftfahrzeugs gesehen nach hinten und andererseits in Querrichtung des Kraftfahrzeugs gesehen nach außen verlagert ist.

2. Seitlicher Heckbereich (10) nach Anspruch 1, **dadurch gekennzeichnet, dass** in der ausgefahrenen Betriebsstellung des Luftführungselements (14) die Strömungsführungsfläche (16) des Luftführungselements (14) bündig zur einer sich vorne unmittelbar an die Strömungsführungsfläche (16) des Luftführungselements (14) anschließenden Außenfläche (17) des hinteren Karosserieteils (11) verläuft.

3. Seitlicher Heckbereich (10) nach Anspruch 1 oder 2, **dadurch gekennzeichnet, dass** in der eingefahrenen Ruhestellung des Luftführungselements (14) die Strömungsführungsfläche (16) des Luftführungselements (14) vollständig in den seitlichen Heckbereich (10) eingefahren ist.

4. Seitlicher Heckbereich (10) nach einem der Ansprüche 1 bis 3, **dadurch gekennzeichnet, dass** die Luftleitvorrichtung (13) zusätzlich zu dem die Strömungsführungsfläche (16) aufweisenden, relativ zum hinteren Karosserieteil (11) verlagerbaren Luftführungselement (14) eine Führungs- und Antriebseinheit (15) aufweist, welche das Luftführungselement (14) bei der Verlagerung relativ zum hinteren Karosserieteil (11) führt und antreibt.

5. Seitlicher Heckbereich (10) nach Anspruch 4, **dadurch gekennzeichnet, dass** die Führungs- und Antriebseinheit (15) mindestens eine feststehende Führungsschiene (19) und mindestens einen relativ zur feststehenden Führungsschiene (19) verlagerbaren Gleitstein (20) aufweist, wobei das Luftführungselement (14) mit mindestens einem Führungsbolzen (21) in eine Führungsnut (22) einer jeweiligen Führungsschiene (19) und in mindestens eine Führungsnut (23) eines jeweiligen Gleitsteins (20) eingreift.

6. Seitlicher Heckbereich (10) nach Anspruch 5, **dadurch gekennzeichnet, dass** die Führungs- und Antriebseinheit (15) einen Antrieb (28) aufweist, welcher den jeweiligen Gleitstein (20) relativ zur jeweiligen Führungsschiene (19) und über den jeweiligen Gleitstein (20) das Luftführungselement (14) relativ zum hinteren Karosserieteil (11) verlagert.

7. Seitlicher Heckbereich (10) nach Anspruch 5 oder 6, **dadurch gekennzeichnet, dass** die Führungsnut (22) der jeweiligen Führungsschiene (19) einen ersten Führungsabschnitt (22a) für die Verlagerung des mindestens einen Führungsbolzens (21) und damit des Luftführungselements (14) der Luftleitvorrichtung (13) in Längsrichtung oder hauptsächlich in Längsrichtung des Heckbereichs bzw. des Kraftfahrzeugs und mindestens einen zweiten Führungsabschnitt (22b) für die Verlagerung des mindestens einen Führungsbolzens (21) und damit des Luftführungselements (14) der Luftleitvorrichtung (13) in Querrichtung oder hauptsächlich in Querrichtung des Heckbereichs bzw. des Kraftfahrzeugs aufweist.

8. Seitlicher Heckbereich (10) nach einem der Ansprüche 5 bis 7, **dadurch gekennzeichnet, dass** die mindestens eine Führungsnut (23) des jeweiligen Gleitsteins (20) gekrümmt kontriert ist und schräg zu den Führungsabschnitten (22a, 22b) der jeweiligen Führungsschiene (19) verläuft.

9. Seitlicher Heckbereich (10) nach einem der Ansprüche 5 bis 8, **dadurch gekennzeichnet, dass** die Führungs- und Antriebseinheit (15) eine obere feststehende Führungsschiene (19) und eine untere feststehende Führungsschiene (19) aufweist, wobei mit jeder Führungsschiene (19) jeweils ein Gleitstein (20) zusammenwirkt, und wobei vorzugsweise zwei obere Führungsbolzen (21) in die Führungsnuten (22, 23) der oberen Führungsschiene (19) und des oberen Gleitsteins (20) eingreifen, und wobei vorzugsweise ein einziger unterer Führungsbolzen (21) in die Führungsnuten (22, 23) der unteren Führungsschiene (19) und des unteren Gleitsteins (20) eingreift.

10. Seitlicher Heckbereich (10) nach einem der Ansprüche 5 bis 9, **dadurch gekennzeichnet, dass** die Führungs- und Antriebseinheit (15) ein Gehäuse (18) aufweist, wobei in einem Innenraum des Gehäuses (18) die mindestens eine feststehende Führungsschiene (19) und der mindestens einen Gleitstein (20) angeordnet sind, wobei sich Vorsprünge (25) des Luftführungselements (14) von einer der Strömungsführungsfläche (16) abgewandten Seite des Luftführungselements (14) mit Abschnitten durch Schlitze (26) im Gehäuse (18) in das Gehäuse (18) hinein erstrecken, und wobei an den im Gehäuse angeordneten Abschnitten der Vorsprünge (25) des Luftführungselements (14) die Führungsbolzen (21) des Luftführungselements (14) ausgebildet oder angeordnet sind.

11. Kraftfahrzeug, mit zwei seitlichen Heckbereichen (10) nach einem der Ansprüche 1 bis 10.
